# EUROPEAN PATENT SPECIFICATION

(11) **EP 2 783 971 B1**
(45) Date of publication and mention of the grant of the patent: **29.05.2024**
(21) Application number: 14160913.1
(22) Date of filing: 20.03.2014
(51) Int. Cl.: B62J 6/028, B62J 43/13, B62J 45/41, B62K 23/02, B62J 6/015, B62M 6/50

(54) **Electric bicycle**
Elektrisches Fahrrad
Bicyclette électrique

(30) Priority: 25.03.2013 JP 2013062286
(43) Date of publication of application: 01.10.2014
(73) Proprietor: Yamaha Hatsudoki Kabushiki Kaisha, Iwata-shi, Shizuoka 438-8501 (JP)
(72) Inventor: Arimune, Nobuyasu, Iwata-shi, Shizuoka 438-8501 (JP); Negoro, Masanori, Iwata-shi, Shizuoka 438-8501 (JP); Kinpara, Yuki, Iwata-shi, Shizuoka 438-8501 (JP)
(74) Representative: Grünecker Patent- und Rechtsanwälte PartG mbB

(56) References cited:
- EP-A1- 1 508 513
- EP-A2- 0 888 960
- WO-A1-2012/014396
- JP-A- H08 268 376
- JP-A- H09 323 694
- JP-A- H10 273 081
- JP-A- 2011 063 148
- NL-C2- 1 034 072
- "Instruction manual 2008 Koga-Miyata", , 2008, pages 1-20, XP055125309, Retrieved from the Internet: URL:http://www.gebruikershandleiding.com/K oga-2008/handleiding-5-516309.html [retrieved on 2014-06-26]

## Description

The present invention relates to an electric bicycle according to the preamble of independent claim 1. Such electric assist bicycle can be taken from the prior art document JP H 09-323694 A wherein the circuit for controlling the motor is independent from the circuit controlling the light.

Japanese Patent Publication JP-A-9-58562 discloses an electric bicycle in which a light is automatically turned on when there is a necessity for the light while traveling.

Since a driver does not need to manually switch ON/OFF of the light in an automatic light state in which the ON/OFF-states of the light are automatically switched as described above, driver convenience is high. Further, since the light is turned on only when the light needs to be turned on, the unnecessary power consumption of a battery is suppressed.

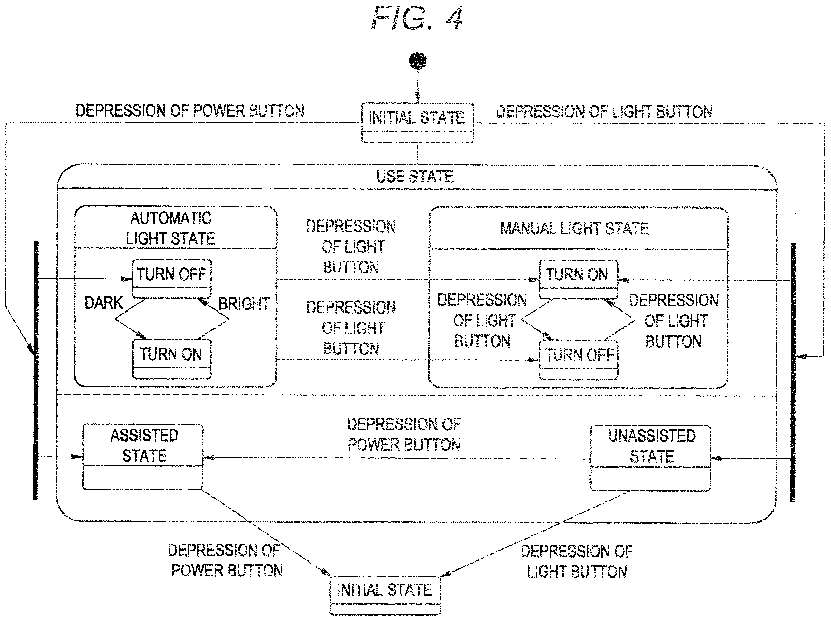

An electric bicycle having input means for switching a manual light state and the automatic light state disclosed in the JP-A-9-58562, wherein the manual light state is a state in which ON/OFF of the light are manually switched, is known. Fig. 4 shows a state transition diagram in which the transition of states of assist and the states of the light is performed by such an input means.

The electric bicycle shown in Fig. 4 can switch ON-state of the light according to a user's intention as in a case in which the user wants to turn on a light even though brightness is at the degree in which the light is not turned on in the automatic light state, thus, the driver's convenience is improved. Further, when brightness around the electric bicycle is high, the light is turned off in the automatic light state. Accordingly, a power-saving property is also improved.

Incidentally, when the light is turned on and an assisted state is maintained while the electric bicycle travels at night, the power consumption of the battery is large. The reason for this is that the battery supplies power to both an electric motor and the light. Accordingly, there is a case in which a driver of the electric bicycle wants to suppress the power consumption of the battery while traveling at night, such as a case in which a driver perceives that the residual quantity of the battery is small while the electric bicycle travels at night.

However, when the transition of a state is performed as shown in Fig. 4, it is not possible to switch the assisted state and the light-on state to an unassisted state while the light continues to be turned on. That is, when the driver wants to suppress the power consumption of the battery while the electric bicycle travels at night, it is not possible to instantly switch the state. For this reason, there is room for improvement in the driver convenience and the power-saving property of the battery.

It is the object of the present invention to provide an electric bicycle that ensures driver's convenience.

According to the present invention said object is solved by an electric bicycle having the features of independent claim 1. Preferred embodiments are laid down in the dependent claims.

Illustrative aspects provide an electric bicycle that is excellent in the driver convenience and the power-saving property.

According to one aspect, there is provided an electric bicycle comprising:
a battery;
an electric motor that uses the battery as a power source to generate assist power;
a light that uses the battery as a power source to be turned on;
a light-darkness detection sensor;
first input means for switching an automatic light state in which an ON-state of the light is automatically controlled according to an output of the light-darkness detection sensor to a manual light state in which ON/OFF of the light are switched by the operation of an operating element; and
second input means for switching an assisted state in which the assist power of the electric motor is generated to an unassisted state in which the assist power of the electric motor is not generated, in the automatic light state.

According to the illustrative aspect, since it is possible to switch the automatic light state and the manual light state, the driver convenience is high. Further, it is possible to use the automatic light state in which the light is automatically turned on/off, the power-saving property is high. Furthermore, since it is possible to instantly switch the assisted state to the unassisted state in the automatic light state by the second input means, the driver convenience is improved.

According to one aspect, the electric bicycle may comprise:
third input means for switching the unassisted state to the assisted state, in the automatic light state.

Since it is possible to switch " the unassisted state and the automatic light state " to the assisted state by the third input means and to instantly obtain an assist force from the electric motor, the driver's convenience is high.

According to one aspect, the electric bicycle may comprise:
fourth input means for stopping the supply of power to the electric motor and the light from the battery, from the automatic light state and the unassisted state.

Since it is possible to instantly stop the supply of power from the battery from "the automatic light state and the unassisted state" by the fourth input means, the driver's convenience is high.

According to one aspect, the fourth input means may stop the supply of power to the electric motor and the light from the battery, even from the automatic light state and the assisted state.

Since the supply of power from the battery is stopped using the same fourth input means, the driver easily understands an operation and driver convenience is improved.

According to one aspect, the electric bicycle may comprise:
fifth input means for switching a state to an ON/OFF fixing state in which the ON-state and an OFF-state of the light are fixed regardless of the output of the light-darkness detection sensor, in the unassisted state.

Since it is possible to fix the ON-state of the light by the fifth input means, driver convenience is high. Further, since the driver can fix the ON/OFF-states of the light on the basis of one's own determination, it is possible to suppress the power consumption of the battery.

According to one aspect, the electric bicycle may comprise:
sixth input means for mutually switching the ON-state and the OFF-state of the light, in "the unassisted state and the ON/OFF fixing state".

Since it is possible to switch the ON-state of the light according to the driver's intention by the sixth input means, driver convenience is high.

According to one aspect, the electric bicycle may comprise:
third input means for switching the unassisted state to the assisted state, in the automatic light state;
fourth input means for stopping the supply of power to the electric motor and the light from the battery, from the automatic light state and the unassisted state;
fifth input means for switching a state to an ON/OFF fixing state in which the ON-state and the OFF-state of the light are fixed regardless of an output of the light-darkness detection sensor, in the unassisted state; and
sixth input means for mutually switching the ON-state and the OFF-state of the light, in the unassisted state and in the ON/OFF fixing state,
wherein the second input means and the third input means may be input means different from the fourth input means, the fifth input means and the sixth input means.

Since different input means are provided for functions of switching respective states, the driver easily understands their operations and the driver convenience is improved.

According to one aspect, the electric bicycle may comprise:
third input means for switching the unassisted state to the assisted state, in the automatic light state,
wherein the second input means and the third input means may be the same input means.

Since the switching of the state of the assist, such as the switching the assisted state to the unassisted state, and the switching the unassisted state to the assisted state, is realized by the same input means, the driver easily understands the operation and the driver convenience is improved.

### BRIEF DESCRIPTION OF THE DRAWINGS

Fig. 1 is a right side view of an electric bicycle that is an embodiment of the invention.
Fig. 2 is a block diagram of the electric bicycle of Fig. 1.
Fig. 3 is a state transition diagram of states of assist and states of a light of the electric bicycle of Fig. 1.
Fig. 4 is a state transition diagram of the states of the assist and the states of the light of the electric bicycle according to a reference example.
Fig. 5 is a state transition diagram of the states of the assist and the states of the light of the electric bicycle according to a modification of the invention.

### DETAILED DESCRIPTION

Exemplary embodiments of the invention will now be described with reference to the drawings. A first exemplary embodiment of the invention will be described below with reference to attached figures. The dimensions of elements of each drawing do not truly represent the dimensions of actual elements and ratios of the dimensions of each element.

In the following description, the front, the rear, the left, and the right mean the front, the rear, the left, and the right views from a driver who is seated on a seat 24 of an electric bicycle while gripping a handlebar 23.

### < Entire structure of electric bicycle >

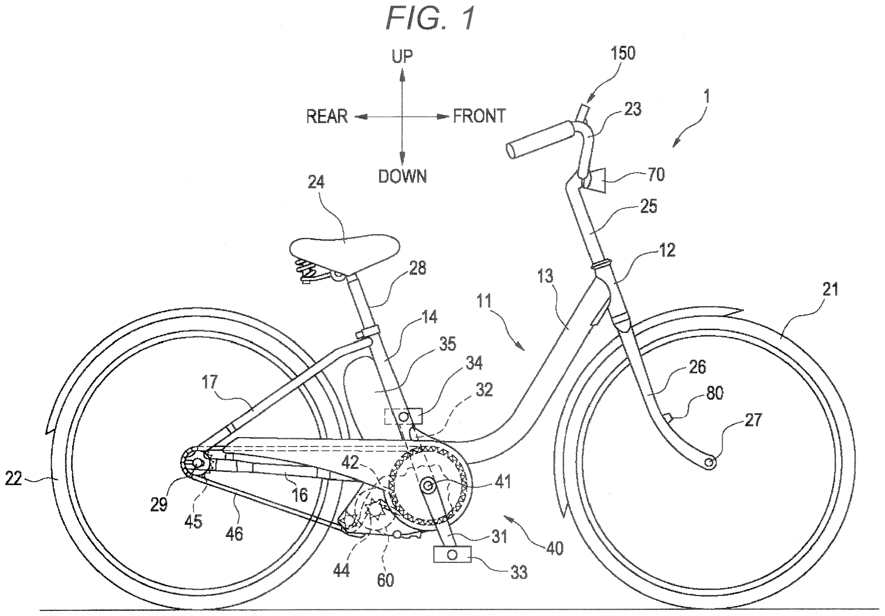

Fig. 1 shows the schematic structure of an electric bicycle according to a first exemplary embodiment.

The electric bicycle assists pedal stepping force which is obtained by stepping on pedals 33 and 34 by assist force which is output from an electric motor 60.

As shown in Fig. 1, the electric bicycle includes a vehicle body frame 11 that extends in a longitudinal direction. Further, the electric bicycle includes a front wheel 21, a rear wheel 22, a handlebar 23, a seat 24, and a power unit 40.

The vehicle body frame 11 includes a head pipe 12, a down frame 13, a seat frame 14, a pair of chain stays 16, and a pair of seat stays 17. The head pipe 12 is disposed at the front portion of the electric bicycle. The front portion of the down frame 13, which extends rearward, is connected to the head pipe 12. The seat frame 14 is connected to the rear portion of the down frame 13, and extends upward and obliquely rearward from the rear end portion of the down frame 13.

A handlebar stem 25 is rotatably inserted into the head pipe 12. The handlebar 23 is fixed to the upper end portion of the handlebar stem 25. Front forks 26 are fixed to the lower end portion of the handlebar stem 25. The front wheel 21 is rotatably supported at the lower end portions of the front forks 26 by an axle 27.

A seat pipe 28 is inserted into the cylindrical seat frame 14. The seat 24 is provided at the upper end portion of the seat pipe 28.

The pair of chain stays 16 is provided so as to sandwich the rear wheel 22 from the left and right sides. The pair of chain stays 16 extends toward the center of rotation of the rear wheel 22 from the rear portion of the down frame 13. The pair of seat stays 17 extends toward the center of rotation of the rear wheel 22 from the upper portion of the seat frame 14. The rear wheel 22 is rotatably supported at the rear end portions of the chain stays 16 and the seat stays 17 by a driving shaft 29.

A battery 35, which supplies power to the electric motor 60 of the power unit 40, is disposed in the rear of the seat frame 14. The battery 35 includes a rechargeable battery (not shown) that can be discharged and charged and a battery control unit. The battery control unit controls the charge and discharge of the rechargeable battery, and monitors an output current, residual capacity, and the like of the battery.

The power unit 40 includes a crankshaft 41, a driving sprocket 42, a driven sprocket 45, a chain 46, and the electric motor 60.

The crankshaft 41 is rotatably provided at the lower portion of the seat frame 14. The crankshaft 41 is provided so as to extend in a lateral direction. Crank arms 31 and 32 are mounted on both end portions of the crankshaft 41. The pedals 33 and 34 are rotatably mounted on the tips of the crank arms 31 and 32.

The driving sprocket 42 is mounted on one side of the crankshaft 41. The driving sprocket 42 is rotated together with the crankshaft 41. The driven sprocket 45 is provided coaxially with the driving shaft 29 of the rear wheel 22. The driven sprocket 45 is connected to the rear wheel 22 through a one-way clutch (not shown).

The endless chain 46 is wound around the driving sprocket 42 and the driven sprocket 45. Accordingly, when the driver steps on the pedals 33 and 34, the driving sprocket 42 is rotated. In addition, the rotation of the driving sprocket 42 is transmitted to the driven sprocket 45 through the chain 46, so that the rear wheel 22 is driven.

The electric motor 60 is fixed to the vehicle body frame 11 near the crankshaft 41. An output shaft of the electric motor 60 is provided with an auxiliary sprocket 44. Power is supplied to the electric motor 60 from the battery 35. When power is supplied to the electric motor 60, the electric motor 60 can be driven. The rotation of the electric motor 60 is transmitted to the chain 46 through the auxiliary sprocket 44. In this way, when the power is supplied to the electric motor 60, the driving force as the assist force is generated in the electric motor 60. The assist force is transmitted to the rear wheel 22 through the chain 46.

A light 70 is fixed to the handlebar stem 25. The light 70 is a headlight that emits light to the front of a vehicle. Power is supplied to the light 70 from the battery 35. A light-darkness detection sensor 80 is provided on the front fork 26. The light-darkness detection sensor 80 outputs different signals when the brightness around the electric bicycle is equal to or more than a specific threshold and when the brightness around the electric bicycle is less than a specific threshold.

### < Controller >

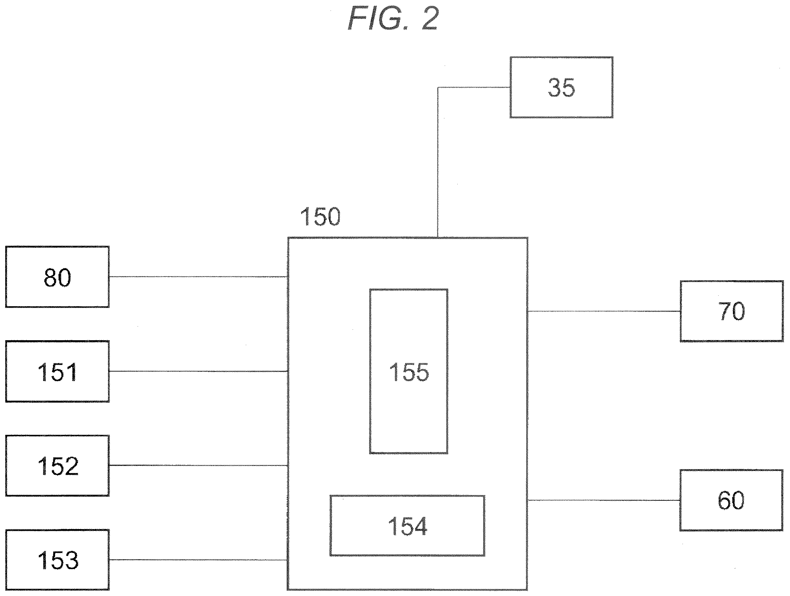

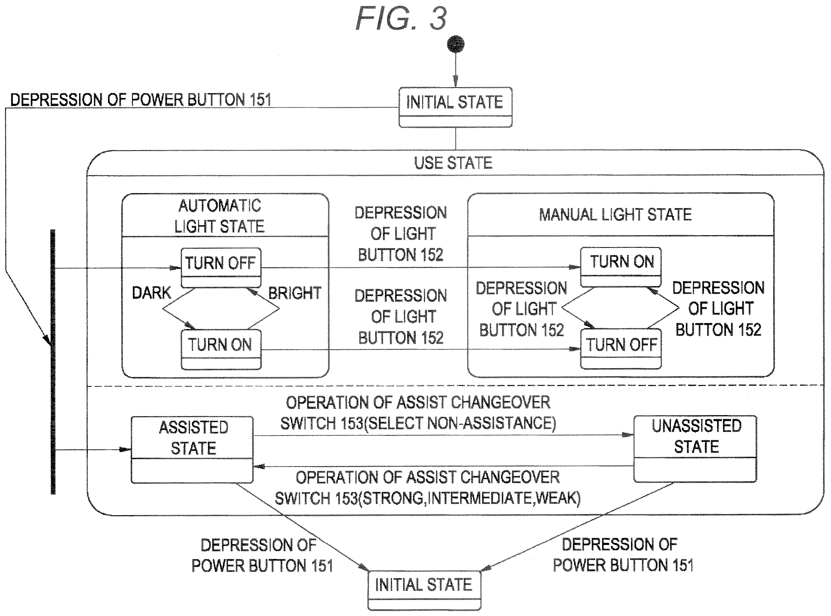

The electric bicycle includes a controller 150. The controller 150 is also operated by power supplied from the battery 35. Fig. 2 is a block diagram of the controller 150. Fig. 3 is a state transition diagram of the state of the assist and the states of the light 70 of the electric bicycle according to this embodiment.

As shown in Fig. 2, the outputs of the light-darkness detection sensor 80, a power button 151, a light button 152, and an assist changeover switch 153 are input to the controller 150. The controller 150 controls operations of the light 70 and the electric motor 60. Further, the controller 150 includes a display unit 154 and a control unit 155.

The power button 151 and the light button 152 are push switches, and input different signals to the control unit 155 and change over states upon the buttons are pressed. The assist changeover switch 153 is a slide switch. The power button 151, the light button 152 and the assist changeover switch 153 are provided on a handlebar 23 together with the display unit 154.

The display unit 154 displays the state of the assist and the state of the light 70 currently set in the vehicle, and notifies the driver of the states. The display unit 154 may be formed of, for example, a liquid crystal display panel or the like.

The control unit 155 includes a memory in which a program for the transition of various states to be described below is stored, and a CPU that executes the program. When the supply of power to the control unit 155 is cut off, the supply of power to the electric motor 60 and the light 70 is also stopped. Meanwhile, power output from the battery 35 is supplied to the electric motor 60 and the light 70 through the control unit 155.

According to the electric bicycle of this embodiment, it is possible to switch the states of the assist and the states of the light 70 as shown in Fig. 3. Prior to the description of Fig. 3, the state of the assist and the states of the light 70 will be described.

The state of the assist represents whether or not an assist force generated by the electric motor 60 is transmitted to the rear wheel 22, which is a driving wheel, and the magnitude of the assist force. The state of the assist includes an unassisted states and an assisted state.

The unassisted state is a state in which the assist force generated by the electric motor 60 is not transmitted to the rear wheel 22. That is, the unassisted state is a state in which the rear wheel 22 is driven by only force of the driver stepping on the pedal 33.

The assisted state is a state in which the assist force generated by the electric motor 60 is transmitted to the rear wheel 22. That is, the assisted state is a state in which the rear wheel 22 is driven by the assist force generated from the electric motor 60 in addition to the force of the driver stepping on the pedal 33.

In this embodiment, the assist force of the electric motor 60 is output as a value that is obtained by multiplying the force of the driver stepping on the pedal 33 by a coefficient (assist ratio) k in the assisted state. It is possible to switch among a strong assist state in which the coefficient k is large, an intermediate assist state in which the coefficient k is intermediate, a weak assist state in which the coefficient k is small, and an unassisted state in which the coefficient k is 0, according to the selected position of the assist changeover switch 153 of a slide switch.

The states of the light 70 include a light-on state in which the light 70 is turned on and a light-off state in which the light 70 is turned off. Further, the states of the light 70 include an automatic light state in which a state is automatically switched between the light-on state and the light-off state according to the output of the light-darkness detection sensor, and a manual light state in which a state is switched between the light-on state and the light-off state by the driver's intention. More exactly, in the electric bicycle according to this embodiment, the automatic light state includes the light-on state and the light-off state and the manual light state includes the light-on state and the light-off state. In this embodiment, an operating element, which switches between the light-on state and the light-off state in the manual light state, is the light button 152.

### < Description of state transition >

Next, the change of the state of the assist and the states of the light 70 of the electric bicycle according to this embodiment will be described with reference to Fig. 3.

First, when the battery 35 is connected to an electric bicycle body, the controller 150 becomes an initial state. The initial state is a state in which power is supplied to the controller 150 from the battery 35 and the power button 151, the light button 152, and the assist changeover switch 153 are not operated. The initial state is a standby state which only receives the depression of the power button 151, and has the minimum power consumption. Further, in the initial state, power is not supplied to the electric motor 60 and the light 70 from the battery 35.

### < Depression of power button from initial state >

When the power button 151 is pressed in the initial state, it becomes the assisted state and the automatic light state. In this state, when the brightness around the electric bicycle is lower than specific brightness, it becomes the assisted state and the light-on state. On the other hand, when the brightness around the electric bicycle is higher than specific brightness, it becomes the assisted state and the light-off state.

Meanwhile, even though the light button 152 is pressed from the initial state, the state of the assist and the states of the light 70 are not changed. Likewise, even though the assist changeover switch 153 is switched from the initial state, the state of the assist and the state of the light 70 are not changed.

### < Depression of power button when assisted state and automatic light state >

Next, when the power button 151 (an example of third input means and fourth input means) is pressed when the assisted state and the automatic light state, the supply of power to the electric motor 60 and the light 70 from the battery 35 is stopped and it becomes the initial state which receives only the depression of the power button 151. In this case, when the power button 151 is depressed when the assisted state and the automatic light state, it becomes the initial state in which the supply of power to the electric motor 60 and the light 70 from the battery 35 is stopped, regardless of the ON/OFF-states of the light 70.

### < Depression of light button when assisted state and automatic light state >

Next, when the light button 152 (an example of first input means) is pressed when the assisted state and the automatic light state, it becomes the assisted state and the manual light state. Accordingly, it is possible to turn on and off the light 70 on the basis of the will of the driver while assist force is obtained from the electric motor 60. For example, even though the brightness around the electric bicycle is high so that the light is turned off, when the driver presses the light button 152 in the automatic light state it is possible to turn on the light 70. Accordingly, since it is possible to turn on the light 70 on the basis of the will of the driver, the driver convenience is high.

### < Operation of assist changeover switch when assisted state and automatic light state >

When the driver operates the assist changeover switch 153 in the assisted state and the automatic light state, an assisted state corresponding to the selected degree is obtained. For example, when the driver moves a slider of the assist changeover switch 153 to a position corresponding to the strong assist state, the strong assist state is obtained. Meanwhile, even though the assist changeover switch 153 is operated, the state of the light 70 is not changed.

In this case, in the assisted state and the automatic light state, when the slider of the assist changeover switch 153 (an example of the second input means) is moved to a position corresponding to the unassisted state, the unassisted state is obtained. Accordingly, it is possible to switch "the automatic light state and the assisted state" to " "the automatic light state and the unassisted state".

Meanwhile, when the assist changeover switch 153 (an example of third input means) is operated again in the automatic light state and the unassisted state, it is possible to appropriately change the state of the assist in the automatic light state.

Meanwhile, when the power button 151 is pressed even in any states corresponding to the selected assist degree, it becomes the initial state in which the supply of power to the electric motor 60 and the light 70 from the battery 35. Further, when the light button 152 is pressed once even in any state corresponding to the selected assist degree, the ON/OFF-states of the light 70 are inverted and it shifts to the manual light state.

### < Depression of power button in manual light state >

When the power button 151 is pressed in the manual light state, it becomes the initial state in which the supply of power to the electric motor 60 and the light 70 from the battery 35 is stopped regardless of the state of the assist and the state of the light 70.

### < Depression of light button in manual light state >

When the light button 152 is pressed in the manual light state, the ON/OFF-state of the light is inverted. More specifically, when the light button 152 is pressed in the manual light state, the ON/OFF-state of the light is inverted regardless of the assisted state/unassisted state and the degree of assist. That is, when the light button 152 is pressed when the light has been turned on, the light becomes turned off. Conversely, when the light button 152 is pressed when the light has been turned off, the light becomes turned on. Whenever the light button 152 is pressed subsequently, the ON/OFF-state of the light is inverted.

### < Operation of assist changeover switch in manual light state >

When the assist changeover switch 153 is operated in the manual light state, an assisted state corresponding to the selected degree is obtained without the change of the ON/OFF of the light 70.

In this case, it is possible to select the unassisted state by the assist changeover switch 153 in the assisted state and the manual light state. Accordingly, it is possible to switch "the manual light state and the assisted state" to "the manual light state and the unassisted state".

### < Comparison with reference example >

Next, the effect of the electric bicycle according to the above-mentioned embodiment will be described while comparing with an electric bicycle according to a reference example.

### < Description of operation of electric bicycle according to reference example >

Fig. 4 is a state transition diagram of the electric bicycle according to the reference example. The electric bicycle according to the reference example is provided with only two kinds of buttons, that is, a power button and a light button.

According to the configuration of Fig. 4, it becomes the assisted state and the automatic light state by pressing the power button when the electric bicycle travels at night. In this state, when the driver perceives that the residual quantity of the battery is small, the driver wants to switch the unassisted state instantly. However, according to the configuration of Fig. 4, if the driver presses the power button, it will become the initial state and the light will be turned off. Further, even though the driver presses the light button, the unassisted state is not obtained.

In this case, when the driver presses the light button after obtaining the initial state by pressing the power button, it becomes the unassisted state and the light-on state. That is, for switching "the assisted state and the light-on state" to "the unassisted state and the light-on state", it is necessary to press the power button and to further press the light button. That is, it is necessary to press two different buttons in a determined order.

Further, when the transition of the state is performed as described above, the light is turned off from the initial state to the time of pressing the light button. That is, it is not possible to change over the assisted state to the unassisted state while maintaining the light to be turned on.

In the meanwhile, according to the configuration of Fig. 4, when the light button is pressed in the initial state, it becomes the unassisted state and the light-on state. When the power button is pressed in this state, it becomes the assisted state and the light-on state. Accordingly, it is possible to turn on the light while obtaining assist force when the electric bicycle travels at night.

After that, when the driver perceives that the residual quantity of the battery is small, the driver cannot obtain the unassisted state while maintaining the light to be turned on the light. If the driver presses the power button, it becomes the initial state and the light is turned off. If the driver presses the light button, the light is also turned off.

Furthermore, even in this case, for switching "the assisted state and the light-on state" to "the unassisted state and the light-on state", it is necessary to press the power button to obtain the initial state and to press the light button. Accordingly, it is necessary to press two different buttons in a determined order.

As described above, according to the configuration of Fig. 4, driver convenience has deteriorated in that the light becomes turned off when switching "the assisted state and the light-on state" to "the unassisted state and the light-on state". Further, the driver convenience has deteriorated in that it is necessary to press the button two times and to press the different buttons in a determined order. Furthermore, according to the configuration of Fig. 4, it is not possible to obtain "the unassisted state and the automatic light state".

### < Effect of electric bicycle according to this embodiment>

According to the electric bicycle of this embodiment, in the automatic light state, by pressing the assist change over switch 153 (an example of second input means), it is possible to switch the assisted state to the unassisted state. The assist changeover switch 153 is able to switch only the state of the assist without switching the state of the light 70. Accordingly, since the light 70 is not temporarily turned off when switching the assisted state to the unassisted state the driver does not feel any inconvenience.

Further, it is possible to instantly switch the assisted state to the unassisted state by operating only the assist changeover switch 153 in the automatic light state. The number of times of operation of the button is small. Furthermore, since the driver only has to operate the assist changeover switch 153, it is not necessary to operate the plurality of kinds of buttons in a determined order. Accordingly, the driver convenience of the electric bicycle is improved.

In addition, according to the electric bicycle of this embodiment, it is possible to obtain the unassisted state in the automatic light state. When the power button 151 is pressed in the initial state and the unassisted state is selected by the assist changeover switch, this state can be obtained. This state, owing to the automatic light state, allows the light 70 to be turned on only when it is dark. Thus, it is possible to suppress the power consumption of the battery. Accordingly, a power-saving property is high. As described above, the power-saving property and the driver convenience of the electric bicycle according to this embodiment are improved.

Further, in the electric bicycle according to the embodiment, it is possible to switch the unassisted state to the assisted state in the automatic light state when the power button 151 (an example of the third input means) is pressed. Accordingly, when the electric bicycle reaches an uphill while traveling in the unassisted state at night, and the driver needs the assist force from the electric motor 60temporarily, it is possible to instantly switch the assisted state. Therefore, the driver convenience is improved further.

Furthermore, in the electric bicycle according to the embodiment, when the power button 151 (an example of fourth input means) is pressed in the automatic light state and the unassisted state, it is possible to obtain the initial state in which the supply of power to the electric motor 60 and the light 70 from the battery 35 is stopped. For example, after a driver drives the electric bicycle in the automatic light state and the unassisted state and reaches the destination, the driver can instantly obtain the initial state by pressing the power button 151. Accordingly, the driver convenience is improved.

Moreover, in the electric bicycle according to the embodiment, in the automatic light state, it is possible to obtain the initial state, in which the supply of power to the electric motor 60 and the light 70 from the battery 35 is stopped, by pressing the power button 151 even in the assisted state.
That is, although the state of the assist is different, when the driver presses the same power button 151, the common operation which is to obtain the initial state is done. Thus, the usability and the driver convenience are high.

Further, in the electric bicycle according to the embodiment, the ON/OFF-state of the light is inverted when the light button 152 is pressed in "the unassisted state and the automatic light state". That is, in a case where the light button 152 is pressed when it is the light-on state in the automatic light state, , it becomes the light-off in the manual light state. Conversely, in a case where the light button 152 is pressed when it is the light-off state in the automatic light state, it becomes the light-on state in the manual light state.

For example, when the driver wants to turn on the light 70 even though the brightness around the electric bicycle is high and the light 70 is turned off in the automatic light state, the driver would like to switch to the manual light state. When the driver desires to switch the automatic light state to the manual light state as described above, normally, it is desired to switch the ON/OFF-state of the light. For this reason,
as in this embodiment, by inverting the ON/OFF state of the light 70 together with switching the automatic light state to the manual light switch, it is possible to switch both "the automatic light state to the manual light state" and "the ON/OFF state of the light" only by one operation of the button. Accordingly, the driver convenience is high.

Further, in the electric bicycle according to the embodiment, the assist changeover switch 153, which is second input means and third input means, is input means different from the power button that is fourth input means and the light button 152 that is sixth input means. That is, the assist changeover switch 153, which switches the degree of the assisted state, is provided as a button different from the power button 151 that obtains the initial state or the light button 152 that switches the state of the light 70. Since different kinds of input means are provided for each function, the driver easily understands their operations. Accordingly, the driver convenience is improved.

Furthermore, in the electric bicycle according to the embodiment, the second input means for switching the assisted state to the unassisted state in the automatic light state and, the third input means for switching the unassisted state to the assisted state in the automatic light state are the same assist changeover switch 153. That is, the switches which switche between the assisted state and the unassisted state, are formed of one switch. Thus, the driver easily understands an operation for switching the assisted state and the unassisted state. Accordingly, the driver convenience is improved.

### < Modification >

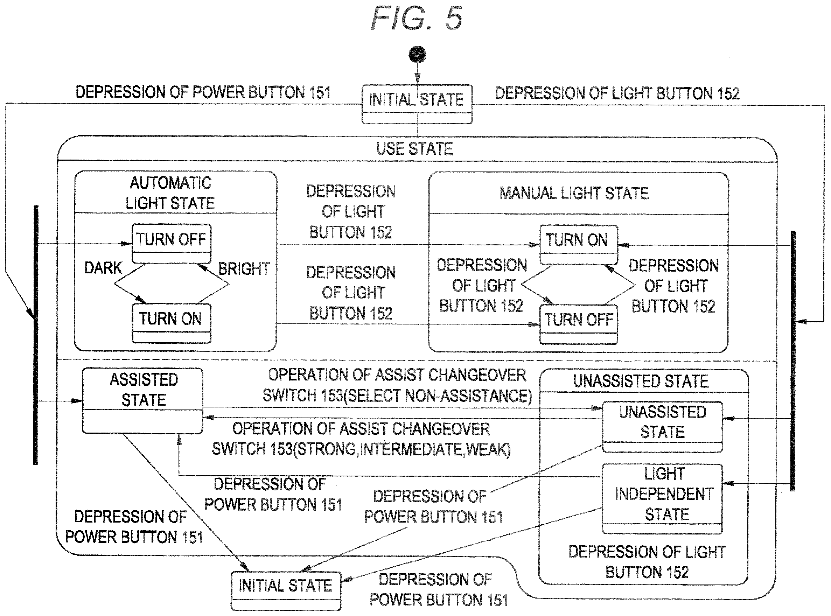

Further, in the invention, the transition of a state may be performed as shown in Fig. 5. Fig. 5 is a state transition diagram of an electric bicycle according to a modification of the invention. In this modification, the way of transiting the state is is different from that of the embodiment, and the structure of the electric bicycle of this modification is the same as that of the embodiment. For this reason, only the transition of the state will be described.

First, the same operation as the operation of the embodiment will be briefly described.

When the power button 151 is pressed in the initial state, it becomes the automatic light state and the assisted state. Further, when the light button 152 is pressed in the automatic light state, the ON/OFF-state of the light 70 is inverted and it becomes the manual light state. In addition, after the power button 151 is pressed in the initial state, when the power button is pressed, regardless of the state of the light 70 and the state of the assist, it becomes the initial state in which the supply of power to the electric motor 60 and the light 70 from the battery 35 is stopped. Moreover, after the power button is pressed in the initial state, when the assist changeover switch 153 is operated,
it is possible to obtain the unassisted state or the assisted state without changing the state of the light 70.

Next, the operation, which is different from the operation of the embodiment, will be described.

When the light button 152 is pressed in the initial state, it becomes a light independent state in which the light 70 is turned on in the unassisted state. In this light independent state, when the light button 152 is pressed to turn off the light 70, it becomes the initial state in which the supply of power to the electric motor 60 and the light 70 from the battery 35 is stopped. For example, when the light button 152 is successively pressed two times from the initial state, the state becomes the initial state, "the unassisted state and the light-on state" and initial state, in this order.

Further, when the power button 151 is pressed in the light independent state, it becomes the assisted state from the unassisted state while maintaining the light 70 turned on.

As described above, according to even the electric bicycle of this modification, in the automatic light state, it is possible to switch the assisted state to the unassisted state when the assist changeover switch 153 (an example of second input means) is pressed. Accordingly, since the light 70 is not temporarily turned off at the time of switching the assisted state to the unassisted state, the driver does not feel any inconvenience. Furthermore, the number of times of operation of the button is small and it is not necessary to operate a plurality of kinds of buttons in a determined order. Accordingly, the driver convenience of the electric bicycle is improved. In addition, it is possible to obtain the unassisted state in the automatic light state. Therefore, it is possible to drive the electric bicycle by only the minimum necessary power consumption of the battery while turning on the light, so that a power-saving property and the driver convenience are high.

Further, according to the electric bicycle of this modification, it is possible to obtain the unassisted state and the light-on state by only pressing the light button 152 in the initial state. That is, it is possible to instantly switch "the unassisted state and the light-off state" to "the unassisted state and the light-on state". This is effective, for example, when the electric bicycle travels with the small residual quantity of the battery from the daytime until the twilight. Accordingly, the power-saving property and the driver convenience are improved further.

Furthermore, in the light independent state, when the power button 151 is pressed, it becomes the assisted state and the light-on state. Accordingly, when the driver wants the assist force of the electric motor 60, it is possible to instantly obtain the assisted state without changing the state of the light 70 by pressing the power button 151. Therefore, the driver convenience is improved.

Moreover, in the light independent state, when the light button 152 is pressed, it becomes the initial state in which the supply of power to the electric motor 60 and the light 70 from the battery 35 is stopped. That is,
when it becomes the state that the power supply from the battery 35 to the electric motor 60 and the light 70 is not necessary,
it is instantly switched to the initial state from the light independent state in which the unassisted state and the light-on state. For this reason, the power-saving property is improved further.

The invention has been described above using the embodiment and the modification, but the technical scope of the invention is not limited to the scope of the description of the embodiment and the modification. It is apparent for those skilled in the art that the embodiment and the modification may have various changes and improvements.

For example, a button of a push switch has been exemplified as input means in the above description, but the invention is not limited thereto. As long as input means which is able to input the operation of the driver to the controller 150, the input means is not limited thereto. For example, a toggle switch, a lever switch, a slide switch, a rotary switch, a locker switch, a touch panel, a throttle unit, and the like may be employed. Further, the first to sixth means have been formed of three input means in the above description, but the number of the input means is not limited to three.

Further, it has been exemplified in the above description that when the light button 152 (an example of the sixth input means) is pressed in the unassisted state and the automatic light state, it becomes the manual light state while inverting the ON/OFF-state of the light 70. However, the invention is not limited thereto. When the light button 152 (an example of fifth input means) is pressed in the unassisted state and the automatic light state, it may be the manual light state without changing the ON/OFF-states of the light 70 while fixing the ON-state or OFF-state of the light 70.

Since it is possible to fix the ON-state of the light 70 in the unassisted state, the driver convenience is high. For example, it is possible to fix the ON-state of the light 70, when the brightness around the electric bicycle is not constant and the ON/OFF-state of the light 70 is frequently switched in the automatic light state. Moreover, since the driver himself/herself determines the necessity of the light and fixes the ON/OFF-state of the light, it is possible to suppress the power consumption of the battery if driving of the electric bicycle is not affected even though the brightness is low somewhat.

Meanwhile, after fixing the light-on state of the light 70, when the light button 152 (an example of sixth input means) is pressed again, the ON/OFF-states of the light 70 may be inverted in the manual light state. Accordingly, it is possible to switch the ON/OFF-state of the light 70 according to the driver's intention.

Meanwhile, this fifth input means is also input means that is different from the second input means and the third input means.

Further, in the electric bicycles according to the embodiment and the modification, an example has been described that the initial state is obtained by pressing the power button 151 (fourth input means) in the automatic light state regardless of the state of the assist. However, the invention is not limited thereto. For example, the initial state may be obtained by the operation of the fourth input means only when the unassisted state and the automatic light state.

Above all things, it is preferable that the fourth input means is configured so that the initial state is obtained by the depression of the fourth input means even when the assisted state and the automatic light state as in the above-mentioned embodiment. The initial state is obtained by the same input means in both the assisted state and the unassisted state, the driver easily understands its operation.

Furthermore, the mounting position of the light 70, the mounting position of the light-darkness detection sensor 80, the mounting position of the controller 150, and the like are also not limited to the above-mentioned embodiment.

## Claims

1. An electric bicycle comprising:
a battery (35);
an electric motor (60) that uses the battery (35) as a power source to generate assist power;
a light (70) that uses the battery (35) as a power source to be turned on;
a light-darkness detection sensor (80), first input means (152) for switching an automatic light state in which an ON-state of the light (70) is automatically controlled according to an output of the light-darkness detection sensor (80) to a manual light state; and
second input means (153) for switching an assisted state in which the assist power of the electric motor (60) is generated to an unassisted state in which the assist power of the electric motor (60) is not generated, in the automatic light state, **characterised by** the manual light state in which ON/OFF of the light (70) are switched by the operation of an operating element.

2. The electric bicycle according to claim 1, **characterized by:**
third input means (151, 153) for switching the unassisted state to the assisted state, in the automatic light state.

3. The electric bicycle according to claim 1 or 2, **characterized by:**
fourth input means (151) for stopping the supply of power to the electric motor (60) and the light (70) from the battery (35), from the automatic light state and the unassisted state.

4. The electric bicycle according to claim 3, **characterized in that** the fourth input means (151) stops the supply of power to the electric motor (60) and the light (70) from the battery (35), even from the automatic light state and the assisted state.

5. The electric bicycle according to any one of claims 1 to 4, **characterized by:**
fifth input means (152) for switching a state to an ON/OFF fixing state in which the ON-state and an OFF-state of the light (70) are fixed regardless of the output of the light-darkness detection sensor (80), in the unassisted state.

6. The electric bicycle according to claim 5, **characterized by:**
sixth input means (152) for mutually switching the ON-state and the OFF-state of the light (70), in "the unassisted state and the ON/OFF fixing state".

7. The electric bicycle according to claim 1, **characterized by:**
third input means (151, 153) for switching the unassisted state to the assisted state, in the automatic light state;
fourth input means (151) for stopping the supply of power to the electric motor (60) and the light (70) from the battery (35), from the automatic light state and the unassisted state;
fifth input means (152) for switching a state to an ON/OFF fixing state in which the ON-state and the OFF-state of the light (70) are fixed regardless of an output of the light-darkness detection sensor (80), in the unassisted state; and
sixth input means (152) for mutually switching the ON-state and the OFF-state of the light (70), in the unassisted state and in the ON/OFF fixing state,
wherein the second input means (153) and the third input means (151, 153) are input means different from the fourth input means (151), the fifth input means (152) and the sixth input means (152).

8. The electric bicycle according to claim 1, **characterized by:**
third input means (151, 153) for switching the unassisted state to the assisted state, in the automatic light state,
wherein the second input means (153) and the third input means (151, 153) are the same input means.

## Patentansprüche

1. Ein Elektro-Fahrrad, das umfasst:
eine Batterie (35);
einen Elektromotor (60), der die Batterie (35) als Energiequelle zur Erzeugung von Unterstützungsleistung nutzt;
eine Leuchte (70), welche die Batterie (35) als Stromquelle nutzt, um eingeschaltet zu werden;
einen Hell-Dunkel-Erfassungssensor (80),
eine erste Eingabeeinrichtung (152) zum Umschalten eines automatischen Beleuchtungszustands, in dem ein EIN-Zustand der Leuchte (70) automatisch gemäß einem Ausgang des Hell-Dunkel-Erfassungssensors (80) gesteuert wird, in einen manuellen Beleuchtungszustand; und
eine zweite Eingabeeinrichtung (153) zum Umschalten eines unterstützten Zustands, in dem die Unterstützungsleistung des Elektromotors (60) erzeugt wird, in einen nicht unterstützten Zustand, in dem die Unterstützungsleistung des Elektromotors (60) nicht erzeugt wird, in dem automatischen Beleuchtungszustand, **gekennzeichnet durch** den manuellen Beleuchtungszustand, in dem EIN/AUS der Leuchte (70) durch die Betätigung eines Bedienelements geschaltet wird.

2. Das Elektro-Fahrrad gemäß Anspruch 1, **gekennzeichnet durch:**
eine dritte Eingabeeinrichtung (151, 153) zum Umschalten des nicht unterstützten Zustands in den unterstützten Zustand in dem automatischen Beleuchtungszustand.

3. Das Elektro-Fahrrad gemäß Anspruch 1 oder 2, **gekennzeichnet durch:**
eine vierte Eingabeeinrichtung (151), um die Stromversorgung des Elektromotors (60) und der Leuchte (70) von der Batterie (35) zu stoppen, aus dem automatischen Beleuchtungszustand und dem nicht unterstützten Zustand.

4. Das Elektro-Fahrrad gemäß Anspruch 3, **dadurch gekennzeichnet, dass** die vierte Eingabeeinrichtung (151) die Stromversorgung des Elektromotors (60) und des Lichts (70) aus der Batterie (35) stoppt, auch im automatischen Beleuchtungszustand und im unterstützten Zustand.

5. Das Elektro-Fahrrad gemäß irgendeinem der Ansprüche 1 bis 4, **gekennzeichnet durch:**
eine fünfte Eingabeeinrichtung (152) zum Umschalten eines Zustands in einen EIN/AUS-Fixierzustand, in dem der EIN-Zustand und ein AUS-Zustand der Leuchte (70) unabhängig von der Ausgabe des Hell-Dunkel-Detektionssensors (80) in dem nicht unterstützten Zustand fixiert sind.

6. Das Elektro-Fahrrad gemäß Anspruch 5, **gekennzeichnet durch:**
eine sechste Eingabeeinrichtung (152) zum wechselseitigen Schalten des EIN-Zustands und des AUS-Zustands der Leuchte (70) in "den nicht unterstützten Zustand und den EIN/AUS-Fixierzustand".

7. Das Elektro-Fahrrad gemäß Anspruch 1, **gekennzeichnet durch:**
eine dritte Eingabeeinrichtung (151, 153) zum Umschalten des nicht unterstützten Zustands in den unterstützten Zustand im Zustand des automatischen Beleuchtungszustand;
eine vierte Eingabeeinrichtung (151), um die Stromversorgung des Elektromotors (60) und des Lichts (70) von der Batterie (35) zu stoppen, aus dem automatischen Beleuchtungszustand und dem nicht unterstützten Zustand;
eine fünfte Eingabeeinrichtung (152) zum Umschalten eines Zustands in einen EIN/AUS-Fixierzustand, in dem der EIN-Zustand und der AUS-Zustand des Lichts (70) unabhängig von einer Ausgabe des Hell-Dunkel-Erfassungssensors (80) in dem nicht unterstützten Zustand fixiert sind; und
eine sechste Eingabeeinrichtung (152) zum wechselseitigen Schalten des EIN-Zustands und des AUS-Zustands der Leuchte (70), im nicht unterstützten Zustand und im EIN/AUS-Fixierzustand,
wobei die zweite Eingabeeinrichtung (153) und die dritte Eingabeeinrichtung (151, 153) andere Eingabeeinrichtung sind als die vierte Eingabeeinrichtung (151), die fünfte Eingabeeinrichtung (152) und die sechste Eingabeeinrichtung (152).

8. Das Elektro-Fahrrad gemäß Anspruch 1, **gekennzeichnet durch:**
dritte Eingabeeinrichtung (151, 153) zum Umschalten des nicht unterstützten Zustands in den unterstützten Zustand im automatischen Beleuchtungszustand,
wobei die zweite Eingabeeinrichtung (153) und die dritte Eingabeeinrichtung (151, 153) die selbe Eingabeeinrichtung sind.

## Revendications

1. Bicyclette électrique comprenant :
une batterie (35) ;
un moteur électrique (60) qui utilise la batterie (35) comme source d'énergie pour générer de l'énergie d'assistance ;
une lampe (70) qui utilise la batterie (35) comme source d'énergie à activer ;
un capteur de détection lumière-obscurité (80), un premier moyen d'entrée (152) pour commuter d'un état de lampe automatique dans lequel un état allumé de la lampe (70) est contrôlé automatiquement en fonction d'une sortie du capteur de détection lumière-obscurité (80) à un état de lampe manuel ; et
un deuxième moyen d'entrée (153) pour commuter d'un état avec assistance dans lequel l'énergie d'assistance du moteur électrique (60) est générée à un état sans assistance dans lequel l'énergie d'assistance du moteur électrique (60) n'est pas générée, dans l'état de lampe automatique,
**caractérisée en ce que** l'état de lampe manuel est un état dans lequel les états allumé/éteint de la lampe (70) sont commutés par l'actionnement d'un élément d'actionnement.

2. Bicyclette électrique selon la revendication 1, **caractérisée par** :
un troisième moyen d'entrée (151, 153) pour commuter de l'état sans assistance à l'état avec assistance, dans l'état de lampe automatique.

3. Bicyclette électrique selon la revendication 1 ou 2, **caractérisée par** :
un quatrième moyen d'entrée (151) pour arrêter l'alimentation en énergie du moteur électrique (60) et de la lampe (70) à partir de la batterie (35), depuis l'état de lampe automatique et l'état sans assistance.

4. Bicyclette électrique selon la revendication 3, **caractérisée en ce que** le quatrième moyen d'entrée (151) arrête l'alimentation en énergie du moteur électrique (60) et de la lampe (70) à partir de la batterie (35), même depuis l'état de lampe automatique et l'état avec assistance.

5. Bicyclette électrique selon l'une quelconque des revendications 1 à 4, **caractérisée par** :
un cinquième moyen d'entrée (152) pour commuter un état vers un état de fixation allumé/éteint dans lequel l'état allumé et un état éteint de la lampe (70) sont fixés indépendamment de la sortie du capteur de détection lumière-obscurité (80), à l'état sans assistance.

6. Bicyclette électrique selon la revendication 5, **caractérisée par** :
un sixième moyen d'entrée (152) pour commuter mutuellement l'état allumé et l'état éteint de la lampe (70), dans « l'état sans assistance et l'état de fixation allumé/éteint ».

7. Bicyclette électrique selon la revendication 1, **caractérisée par** :
un troisième moyen d'entrée (151, 153) pour commuter de l'état sans assistance à l'état avec assistance, dans l'état de lampe automatique ;
un quatrième moyen d'entrée (151) pour arrêter l'alimentation en énergie du moteur électrique (60) et de la lampe (70) à partir de la batterie (35), depuis l'état de lampe automatique et l'état sans assistance ;
un cinquième moyen d'entrée (152) pour commuter un état vers un état de fixation allumé/éteint dans lequel l'état allumé et l'état éteint de la lampe (70) sont fixés indépendamment d'une sortie du capteur de détection lumière-obscurité (80), à l'état sans assistance ; et
un sixième moyen d'entrée (152) pour commuter mutuellement l'état allumé et l'état éteint de la lampe (70), à l'état sans assistance et à l'état de fixation allumé/éteint,
dans laquelle le deuxième moyen d'entrée (153) et le troisième moyen d'entrée (151, 153) sont des moyens d'entrée différents du quatrième moyen d'entrée (151), du cinquième moyen d'entrée (152) et du sixième moyen d'entrée (152) .

8. Bicyclette électrique selon la revendication 1, **caractérisée par** :
un troisième moyen d'entrée (151, 153) pour commuter de l'état sans assistance à l'état avec assistance, dans l'état de lampe automatique,
dans laquelle le deuxième moyen d'entrée (153) et le troisième moyen d'entrée (151, 153) sont le même moyen d'entrée.
